# EUROPÄISCHE PATENTANMELDUNG

(11) **EP 1 267 465 A2**
(43) Veröffentlichungstag der Anmeldung: **18.12.2002**
(21) Anmeldenummer: 02010990.6
(22) Anmeldetag: 17.05.2002
(51) Int. Cl.: H02H 3/087

(54) **Sicherungsschaltung für ein Gleichstrom abgebendes, geregeltes Netzgerät**

(30) Priorität: 13.06.2001 DE 20109687 U
(71) Anmelder: Weidmüller Interface GmbH & Co., 32760 Detmold (DE)
(72) Erfinder: Kontny, Heinz, 92237 Sulzbach-Rosenberg (DE); Miegel, Bernhard, 92237 Sulzbach-Rosenberg (DE)
(74) Vertreter: Specht, Peter, Dipl.-Phys.

(57) **Zusammenfassung**

Eine Sicherungsschaltung für ein Gleichstrom abgebendes, geregeltes Netzgerät, die vorzugsweise in den positiven Zweig eines abzusichernden Stromkreises geschaltet ist, west zwei in Reihe geschaltete Sicherungseinrichtungen (S1, ES1) auf.

## Beschreibung

Die Erfindung betrifft eine Sicherungsschaltung ein Gleichstrom abgebendes, geregeltes Netzgerät nach den Oberbegriffen der Ansprüche 1 und 9.

Bei vielen geregelten Netzgeräten kommt es aufgrund ihrer technischen Eigenschaften zu Überlastungen und Ausfall wegen fehlerhafter Funktion bei dynamischen Ausgangsströmen. Da Sicherungsautomaten und Schmelzsicherungen aufgrund ihres k-Faktors je nach Typ einen Auslösestrom von z.B. 2,5 bis 10-fachen Ihres Nennstromes benötigen, können derartige Netzgeräte von herkömmlichen Sicherungsautomaten und Schmelzsicherungen nicht sicher ausgelöst werden.

Die Erfindung hat daher die Aufgabe, eine Sicherungsschaltung zu schaffen, mit der auch Gleichstrom abgebende, geregelte Netzgeräte mit einem nur begrenzten dynamischen Ausgangsstrom in einfacher Weise abgesichert werden können.

Die Erfindung löst diese Aufgabe durch die Gegenstände der Ansprüche 1 und 9.

Vorteilhafte Ausrührungen sind den Unteransprüchen zu entnehmen.

Die Erfindung schafft einerseits eine Sicherungsschaltung mit zwei in Reihe geschalteten Sicherungseinrichtungen.

Darüber hinaus schafft die Erfindung eine elektronisch ansprechende Sicherung mit einem Stromerfassungs- und Auswertungs-Schaltungsabschnitt, der mit Steuereingängen eines Halbleiterschalters verbunden ist.

Vorzugsweise ist die eine der Sicherungseinrichtungen eine Schmelzsicherung und die zweite Sicherungseinrichtung eine elektronische Sicherung, die vorzugsweise nach der vorstehend genannten Art ausgebildet wird.

Mit der elektronischen Sicherung, die an sich für verschiedenste Gleichstromanwendungen geeignet ist, ist es möglich, den durch die Sicherung fließenden Strom auf einfache Weise zu erfassen und beim Erreichen des eingestellten höchstzulässigen Wertes den Halbleiterschalter, der geeignet schnell ausgelegt ist, innerhalb von Mikrosekunden abzuschalten. Der Stromfluß wird damit unterbrochen.

Der statische Wert liegt bei z.B. 100 Prozent des Sicherungsnennwertes und wird noch mit einem dynamischen Teil versehen. Er erlaubt einen hohen Strom-k-Faktor ähnlich einer herkömmlichen Sicherung - diesen jedoch nur für eine kurze Zeit. Nach der dynamischen Phase löst die elektronische Sicherung wieder bei einem Mehrfachen, z.B. ca. 200 Prozent des Nennstromes aus. Diese Werte sind derart gewählt, daß die vorgeschaltete Schmelzsicherung eben noch nicht auslöst.

Die zusätzliche Schmelzsicherung ermöglicht es, beim Versagen des elektronischen Teils auf die Rückfallsicherungsebene der Schmelzsicherung zurückzugreifen. Sie ermöglicht es ferner, in einfachster Weise eine Normenkonformität überall dort herzustellen, wo eine Schmelzsicherung unbedingt erforderlich ist, obwohl sie die Sicherungsfunktion allein nicht zufriedenstellend erfüllt.

Nachfolgend wird die Erfindung unter Bezug auf die Zeichnung näher beschrieben.

Es zeigt:

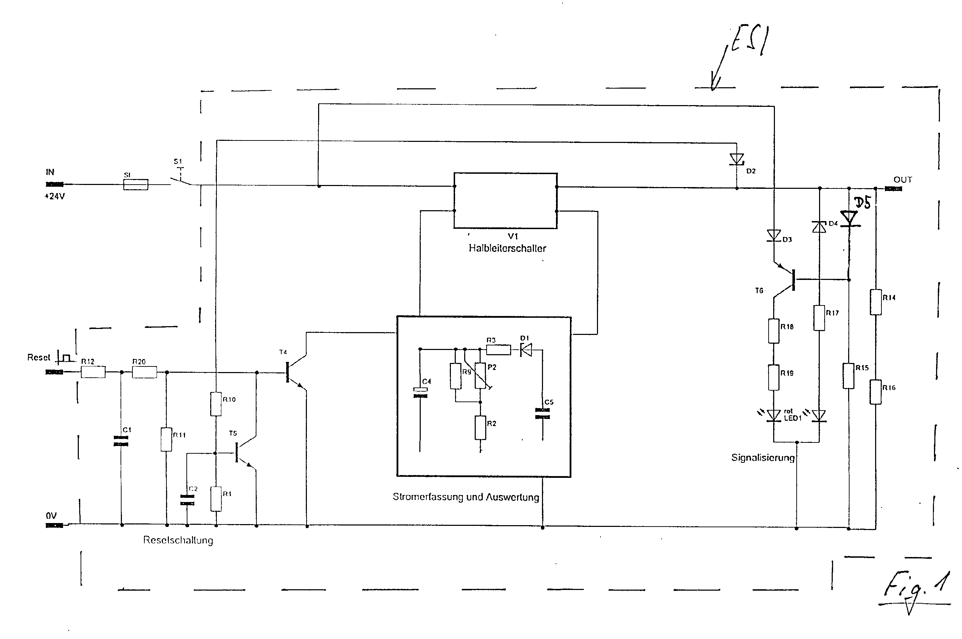

- Figur 1: einen blockartig aufgebauten Schaltplan einer erfindungsgemäßen Sicherungsschaltung.

Figur 1 zeigt, daß die Sicherungsschaltung 1 drei Eingänge (IN, OV, RESET) aufweist, sowie einen Ausgang OUT (hier rein beispielhaft + 24V).

Direkt dem positiven Eingang IN nachgeschaltet ist eine Schmelzsicherung SI, die mit einer elektronischen Sicherung ESI in Reihe geschaltet ist.

Dem Masse- und dem Reset-Eingang nachgeschaltet ist ein Schaltungsabschnitt zum Zurücksetzen des Halbleiterschalters V1.

Der im positiven Zweig angeordneten Schaltsicherung SI ist ein Schalter 1 nachgeschaltet, der mit einem schnellen Halbleiterschalter V1 verbunden ist, welcher vorzugsweise einen FET-Transistor aufweist, der die Eingangsspannung nahezu verlustlos an den Ausgang durchschaltet. Eine vorzugsweise integrierte Stromüberwachung schützt diesen vor Zerstörung durch Überstrom. Dazu schaltet eine eingebaute Überstromerkennung bei einem Strom von typischerweise 240 A den Ausgang innerhalb von typischerweise 300 Mikrosekunden ab.

Weiterhin ist in den Halbleiterschalter vorzugsweise eine Übertemperatursicherung integriert, welche bei Übertemperatur den Ausgang ebenfalls abschaltet und damit den Halbleiterschalter vor Zerstörung schützt. Eingeschaltet werden kann der Halbleiterschalter durch das Anlegen eines OV-Potentiales an einen Steuereingang (hier nicht dargestellt).

Um die Sicherungsfunktionen zu gewährleisten, wird in einem dem Halbleiterschalter V1 zugeordneten Schaltungsabschnitt zur Stromerfassung und Auswertung das stromproportionale Ausgangssignal des Halbleiterschalters zur Realisierung der dynamischen Phase über den Kondensator C4 integriert Mit der Widerstandskombination R2, R3, P2, welche dem Kondensator C4 nachgeschaltet ist, wird ein stromproportionales, durch C4 verzögertes Spannungssignal erzeugt. P2 dient hierbei zur Einstellung der Ausschaltschwelle des Halbleiterschalters. Wird am Kondensator C4 die Zenerspannung von D 1 zuzüglich der Basis-/Ermitterspannung eines Transistors (hier nicht dargestellt) überschritten, zündet eine Thyristor-Schaltung und das 0V-Potential wird an den Steuereingang des Halbleiterschalters V1 gelegt.

Das Wiedereinschalten kann auf zwei Arten erfolgen. Zum Ersetzen wird das komplette Modul durch den Schalter SI von der Eingangsspannung getrennt. Dadurch erlischt die gezündete Thyristorschaltung (nicht dargestellt). Wird der Schalter wieder geschlossen, bleibt der Thyristor gesperrt, solange kein Überstrom am Ausgang entsteht. Zum zweiten wird der Transistor T4 über einen "Resetimpuls" leitend und übernimmt damit den Strom des gezündeten Thyristors, der damit löscht. Beim Übergang des Resetimpulses auf 0 V wird T4 hochohmig, was den Ausgang wieder frei schaltet.

Eine rote und eine grüne Leuchtdiode dienen der Signalisierung von Betriebszuständen und haben auf die Sicherungsfunktion keine Auswirkung. Im Normalbetrieb (Ausgangsspannung vorhanden) wird die vorzugsweise grüne LED über den Vorwiderstand R17 und die Z-Diode D4 bestromt. Die Z-Diode verhindert ein Leuchten der grünen LED bei zu kleiner Ausgangsspannung (rein beispielhaft ca. 18 V). Geht die Ausgangsspannung durch das Abschalten des Halbleiterschalters gegen 0 V, steuert T6 durch und die rote LED wird über die Vorwiderstände R18, R19 bestromt. Die rote LED wird über D3 vom Eingang aus versorgt. Beim Abschalten des Moduls durch den Schalter oder beim Wegfallen der Versorgungsspannung erlöschen beide LED's.

Für verschiedene Strombereiche wird das Modul mit unterschiedlichen Halbleiterschaltern bestückt. Die Grundfunktion bleibt aber die gleiche.

Das Sicherungsmodul ist in einem Kunststoffgehäuse, ähnlich einem Standard-Kartenrelais unterbringbar. Die Abmessungen sind ebenfalls wie das Anschlußlayout eines solchen Relais auslegbar. Damit kann das Sicherungsmodul in jedem Standardrelaissockel (auch reihenklemmenartig) Verwendung finden, so z.B. in Relaissockeln mit integrierter Anschlußmöglichkeit für Drähte und Litzen oder in kompletten Baugruppenträgern, bestückt mit mehreren Relaissockeln. Eine Steckbarkeit bietet eine Flexibilität beim Bestücken und Haltebügel sichern die Module in jeder Einbaulage und bei Erschütterungen vor dem Herausfallen.

## Patentansprüche

1. Sicherungsschaltung für ein Gleichstrom abgebendes, geregeltes Netzgerät, wobei die Sicherungsschaltung vorzugsweise in den positiven Zweig eines abzusichernden Stromkreises geschaltet ist, **gekennzeichnet durch** zwei in Reihe geschaltete Sicherungseinrichtungen (S1, ES1).

2. Sicherungsschaltung nach Anspruch 1, **dadurch gekennzeichnet, daß** die erste Sicherungseinrichtung eine Schmelzsicherung (S1) ist.

3. Sicherungsschaltung nach Anspruch 1 oder 2, **dadurch gekennzeichnet, daß** die zweite Sicherungseinrichtung eine elektronische Sicherung (ES1) ist.

4. Sicherungsschaltung nach einem der vorstehenden Ansprüche, **dadurch gekennzeichnet, daß** die elektronische Sicherung (ES1) einen Halbleiterschalter (V1) aufweist.

5. Sicherungsschaltung nach einem der vorstehenden Ansprüche, **dadurch gekennzeichnet, daß** die elektronische Sicherung (ES1) einen Resetschaltungsabschnitt aufweist, der mit dem Halbleiterschalter (V1) verbunden ist.

6. Sicherungsschaltung nach einem der vorstehenden Ansprüche, **dadurch gekennzeichnet, daß** die elektronische Sicherung (ES1) einen Stromerfassungs- und Auswertungsschaltungsabschnitt aufweist, der mit dem Halbleiterschalter (V1) verbunden ist.

7. Sicherungsschaltung nach einem der vorstehenden Ansprüche, **dadurch gekennzeichnet, daß** die elektronische Sicherung (ESI) eine optische Zustandsanzeige aufweist.

8. Sicherungsschaltung nach einem der vorstehenden Ansprüche, **dadurch gekennzeichnet, daß** die elektronische Sicherung (ESI) mit einer Schnittstelle zur Auswertung und/oder Steuerung über einen Rechner versehen ist.

9. Sicherungsschaltung für ein Gleichstrom abgebendes, geregeltes Netzgerät, wobei die Sicherungsschaltung vorzugsweise in den positiven Zweig eines abzusichernden Stromkreises geschaltet ist, **gekennzeichnet durch** eine elektronisch ansprechende Sicherung (ESI) mit einem Stromerfassungs- und Auswertungsschaltungsabschnitt, der mit Steuereingängen eines Halbleiterschalters verbunden ist.

10. Sicherungsschaltung nach Anspruch 9, **dadurch gekennzeichnet, daß** der dem Halbleiterschalter V1 zugeordnete Schaltungsabschnitt zur Stromerfassung und Auswertung einen Kondensator (C4) aufweist, um das stromproportionale Ausgangssignal des Halbleiterschalters zu integrieren, wobei eine Widerstandskombination (R2, R3, P2), dem Kondensator (C4) nachgeschaltet ist.

11. Sicherungsschaltung nach einem der vorstehenden Ansprüche, **dadurch gekennzeichnet, daß** die Sicherungsschaltung in einem Kunststoffgehäuse angeordnet ist, welches auf einen Klemmensockel, insbesondere einen Reihenklemmensokkel aufrastbar ist.
